# EUROPEAN PATENT SPECIFICATION

(11) **EP 4 529 340 B1**
(45) Date of publication and mention of the grant of the patent: **18.03.2026**
(21) Application number: 23198901.3
(22) Date of filing: 21.09.2023
(51) Int. Cl.: H04W 74/0833, H04W 8/24

(54) **SETTING UP A UE FOR AN INITIAL RACH PROCEDURE**
EINRICHTUNG EINES BENUTZERGERÄTS FÜR EIN ANFÄNGLICHES RACH-VERFAHREN
CONFIGURATION D'UN UE POUR UNE PROCÉDURE RACH INITIALE

(43) Date of publication of application: 26.03.2025
(73) Proprietor: Vodafone Group Services Limited, Newbury RG14 2FN (GB)
(72) Inventor: KULAKOV, Alexey, London, W2 6BY (GB); PUDNEY, Chris, London, W2 6BY (GB); WORRALL, Chandrika, London, W2 6BY (GB)
(74) Representative: Boult Wade Tennant LLP

(56) References cited:
- EP-A1- 3 911 105
- QUALCOMM INCORPORATED: "Complexity Reduction for RedCap Devices", vol. RAN WG1, no. e-Meeting; 20210125 - 20210205, 19 January 2021 (2021-01-19), XP051971636, Retrieved from the Internet <URL:https://ftp.3gpp.org/tsg_ran/WG1_RL1/TSGR1_104-e/Docs/R1-2101471.zip R1-2101471 Complexity Reduction for RedCap Devices.docx> [retrieved on 20210119]
- ERICSSON: "Higher layer support for RedCap", vol. RAN WG1, no. e-Meeting; 20210125 - 20210205, 19 January 2021 (2021-01-19), XP051970753, Retrieved from the Internet <URL:https://ftp.3gpp.org/tsg_ran/WG1_RL1/TSGR1_104-e/Docs/R1-2100035.zip R1-2100035 Higher layer support for RedCap.docx> [retrieved on 20210119]

## Description

### Technical Field of the Disclosure

The present disclosure is concerned with for setting up a User Equipment (UE) for an initial Random Access Channel (RACH) procedure to a cellular network. A cellular network device (for example, a UE or a bast station a cellular network) for such setting up is also considered.

### Background to the Disclosure

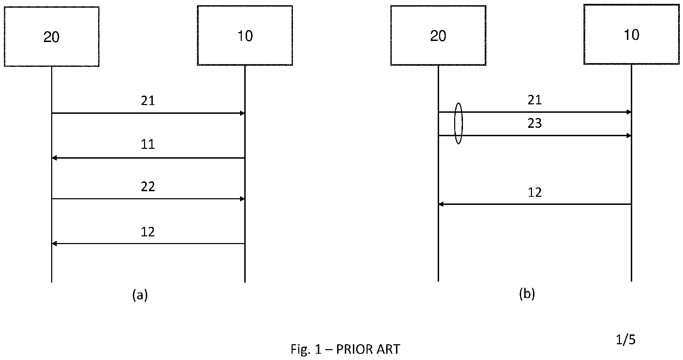

Standards set by the Third Generation Partnership Project (3GPP) define procedures for user (mobile) terminals or User Equipment (UE) to access a cellular network through a Radio Access Network (RAN) formed of cells (each cell having a corresponding base station). Referring to Figure 1, there are shown known schematic message flow diagrams of Contention-Based Random Access (CBRA) using (a) four-step random access; and (b) two-step random access. This drawing is based on an extract of Figure 9.2.6-1 of 3GPP Technical Specification (TS) 38.300 v.17.5.0. The process takes place between a base station (for example, a gNB for 5G RAN) 10 and a UE 20 and is generally understood in the context of 5G NR.

In the first step 21, the UE 20 sends a Random Access Preamble to the network. This is sometimes termed MSG1. In the four-step random access process, the base station 10 replies with a Random Access Response 11, which may be termed MSG2. The UE 20 then sends a Scheduled Transmission 22, termed MSG3. In the two-step random access process, instead of the Random Access Response 11 and the Scheduled Transmission 22, UE 20 also sends a Physical Uplink Shared Channel (PUSCH) payload 23 with the Random Access Preamble 21. In this case, MSG3 forms part of these UE transmissions, which may be termed STEP A. In both two-step and four-step processes, the base station 10 sends a Contention Resolution message 12 to the UE, which is termed MSG4 in the four-step random access process and STEP B in the two-step random access process.

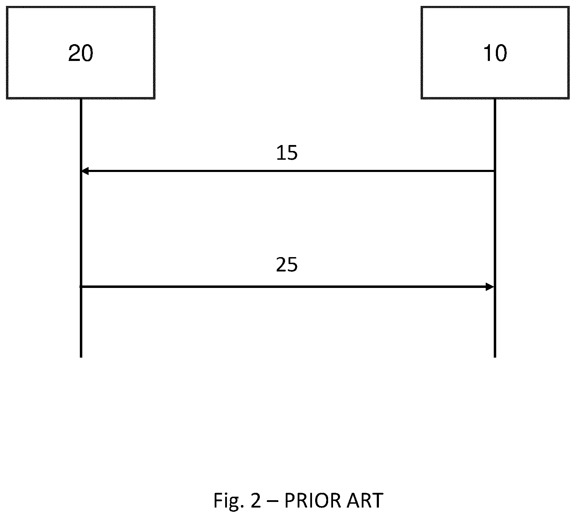

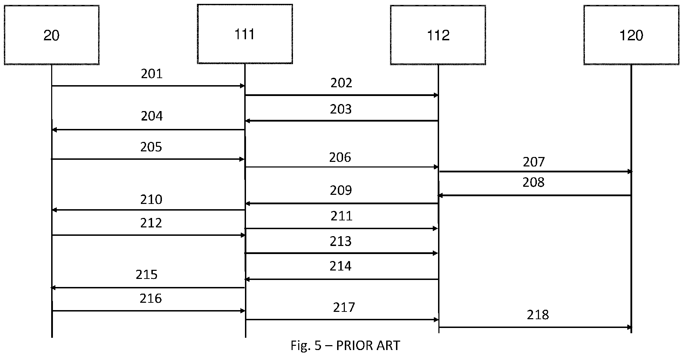

Once the RACH procedure is complete, including security validation, the UE can inform the network of its capabilities. The capabilities can be retrieved by the network from the UE using a UE capability transfer procedure, as described in 3GPP TS 38.331, v.17.5.0, section 5.6.1.1. Referring now to Figure 2, there is depicted a schematic message flow diagram of an existing process for the UE to transfer its UE capability information to the network (reproduced from Figure 5.6.1.1-1 of TS 38.331, v.17.5.0). The network (base station) 10 transmits a UECapabilityEnquiry message 15 to the UE 20. The UE 20 then responds with a UECapabilitylnformation message 25 to the base station 10, which indicates the UE capabilities.

Recent developments in 3GPP standards have shown that it may be beneficial, in certain circumstances, for the network to be aware of UE capabilities before completion of the RACH procedure. In particular, it may be advantageous for the UE to indicate capabilities as part of the MSG3 message. Depending on the capabilities sent in the MSG3 message, the configuration can be different for the MSG4 message. Since the existing procedure for the UE informing the network of its capabilities relies on the RACH procedure having been completed and the messages communicated as part of the RACH procedure can be space limited, this represents a challenge.

3GPP RAN WG1 R1-2101471 ("Complexity Reduction for RedCap Devices") and R1-2100035 ("Higher layer support for RedCap") concern support for reduced capability UEs. EP-3911105 relates to providing early indication by a reduced capability New Radio (NR) UE.

### Summary of the Disclosure

Against this background, the present disclosure provides a method for setting up a User Equipment (UE) for an initial Random Access Channel (RACH) procedure to a cellular network according to claim 1. Also provided is a cellular network device configured to operate according to the method, in line with claim 12. Preferred and/or optional features are defined in dependent claims.

The base station (for example, gNB) sends and preferably broadcasts a configuration of the base station for receiving early indication of UE capabilities. The early indication is to be sent by the UE as a part of the RACH procedure. Conversely, the UE receives this configured prior to starting the RACH procedure and can thereby be set up accordingly. Beneficially, this communication may be made as part of a System Information Block (SIB) broadcast. For example, the communication may be a part of SIB1 or alternatively may be a part of an on-demand SIB.

The communicated configuration can indicate which part (or parts) of which message (or messages) within the RACH procedure can be used for sending an early UE capability indication. For instance, a MSG3 message may be suitable. It should be noted that the base station may accept an early UE capability indication in more than one way (and it may even be possible for these approaches to be combined) and this may be indicated by the communicated configuration. Additionally or alternatively, the communicated configuration can indicate an encoding or mapping understood by the network for sending early indication of the UE capabilities by the UE. Again, more than one encoding or mapping may be understood by the base station and this may be indicated in the communicated configuration.

Specifically, the base station indicates one or more specific portions of a MSG3 message for the UE to send UE capabilities. In particular, the UE sends UE capabilities in a Medium Access Control (MAC) header of a MSG3 message, specifically reserved indices within a Logical Channel ID (LCID) in a MAC header of a MSG3 message and/or reserved (R) bits of a MAC header of a MSG3 message. An additional option may be for the UE to send UE capabilities in a Radio Resource Control (RRC) Connection Request message. Advantageously, the portion (or portions) of such a RRC Connection Request message indicated may include some of the bits allocated for transmission of a UE temporary identity in a RRC Connection Request message. For example, a portion of bits allocated for a S-Temporary Mobile Subscriber Identity (S-TMSI) in a RRC Connection Request message may be used. One possibility along these lines is using a portion of bits allocated for an Access and Mobility Management Function Identity (AMF-ID), within a S-TMSI, in a RRC Connection Request message. Where a portion of bits allocated for a S-TMSI in a RRC Connection Request message are used for the early indication of UE capabilities, the communicated configuration may indicate: a mapping between the portion of bits and specific UE capabilities; and/or that other bits of the S-TMSI (for example, AMF-ID) are communicated in a RRC Connection Setup Complete message. A further additional possibility includes that "spare value" bits inside RRC messages may be used for transmission of early indication of UE capabilities.

Where a MSG3 message is used for the early indication of UE capabilities, the early indication of UE capabilities is advantageously made whilst maintaining a Common Control Channel (CCCH) of 48 or 64 bits.

The UE can thereby be configured for communication of early indication of UE capabilities as a part of the RACH procedure (in other words, set up the RACH procedure messages, particularly the MSG3 message) in accordance with the received configuration. When the UE sends the early indication as a part of a RACH procedure (and conversely, the base station receives the configuration as a part of the RACH procedure), the early indication is made in accordance with the configuration communicated by the base station. The RACH procedure can comprise two or four steps.

### Brief Description of the Drawings

The approach of the disclosure may be put into practice in various ways, one of which will now be described by way of example only and with reference to the accompanying drawings in which:
Figure 1 shows known schematic message flow diagrams of Contention-Based Random Access (CBRA) using (a) four-step random access; and (b) two-step random access;
Figure 2 depicts a schematic message flow diagram of an existing process for the UE to transfer its UE capability information to the network (reproduced from Figure 5.6.1.1-1 of TS 38.331, v.17.5.0);
Figure 3 shows a schematic message flow diagram of CBRA using four-step random access according to an embodiment of the disclosure;
Figure 4 depicts a known format for a Medium Access Control (MAC) subheader (according to Figure 6.1.2-3 of 3GPP TS 38.321 v.17.5.0); and
Figure 5 illustrates an existing schematic message flow diagram of a UE initial access procedure for a Radio Resource Control (RRC) protocol in a Central Unit/Distributed Unit (CU/DU) base station architecture (reproduced from Figure 8.1-1 of 3GPP TS 38.401, v.15.2.0).

Where a drawing indicates a feature also shown in another drawing, identical reference numerals have been used.

### Detailed Description of Preferred Embodiments

As discussed above, the present disclosure extends the existing approach for informing the cellular network of UE capabilities after the initial UE access phase, to during this initial phase (specifically during the RACH procedure). In particular, recent development within 3GPP has considered an increasing number of cases where early informing the network of some UE capabilities, particularly during MSG3 delivery, would be advantageous.

MSG3 includes a Radio Resource Control (RRC) Connection Request message. Moreover, MSG3 is space limited and typically has two formats for Common Control Channel (CCCH): a CCCH format of 48 bits; and a CCCH1 format of 64bits. The upper length limits of these formats are desirably fixed, as the length has an impact on uplink coverage planning. Thus, Uplink CCCH messages are space limited, and no new Information Elements can be introduced without extending the Transport Block Size (TBS) and therefore impacting the coverage. The same is applicable for CCCH1 format. It should also be noted that CCCH messages can also carry RRC Resume, RRC Re-establishment and System Information (SI) request messages. These are coded differently, but all of them desirably fit into 48 bits CCCH or 64 CCCH1 formats. The CCCH1 format can carry only RRC resume 1 message. Whether the cell supports 48-bit CCCH or 64-bit CCCH1 format is broadcast using the "useFullResumelD" parameter, as described in 3GPP TS 38.331, v.17.5.0, section 6.2.2. The length limit on the CCCH and CCCH1 messages makes more difficult the additional transmission of early UE capability indications as part of the messages.

There may be a number of possible ways to achieve this in accordance with the disclosure. Each way may use different bits of the MSG3 message and/or different encodings for the UE capabilities within those bits. The UE does not know if the network supports one or several methods. It is therefore desirable for the UE to know the bits and/or encoding that would be accepted by the network (base station). Otherwise, it may use certain bits and/or certain encodings, which would not be understood by the network with the result that the entire MSG3 message may be rejected. In particular (and as discussed below), it may be possible to use reserved bits for the early indication. Rejection of the MSG3 message may lead to restarting the RACH procedure and re-establishment of the initial access.

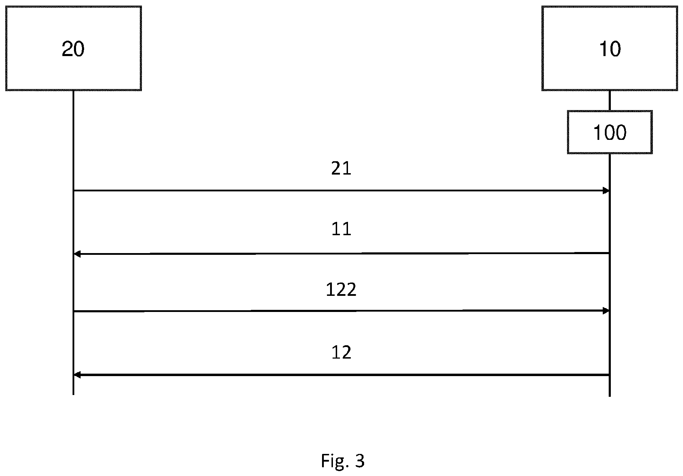

Accordingly, the base station provides this information to any UE wanting the access the network. Referring now to Figure 3, there is shown a schematic message flow diagram of CBRA using four-step random access according to an embodiment of the disclosure. This is based on Figure 1(a) and where the same reference numerals are used, the same features are indicated. As shown in this drawing, the base station 10 initially transmits 100 a configuration of the base station for receiving early indication of UE capabilities, the early indication to be provided within or as part of the RACH procedure. Transmission 100 is performed before the RACH procedure begins and is typically a broadcast. In particular, it may be indicated within a System Information Block (SIB), such as SIB1.

The RACH procedure then proceeds as previously discussed. The UE 20 sends a Random Access Preamble 21 to the network and the base station 10 replies with a Random Access Response 11. The UE 20 then sends to the base station 10, a modified MSG3 122, which comprises an early indication of UE capabilities. This uses the configuration communicated to the UE 20 in transmission 100. Finally, the base station 10 sends a Contention Resolution message 12 to the UE. A four-step random access process is shown, but it will be understood that a corresponding approach could be uses for a two-step random access process.

The transmission 100 can indicate which method is implemented by the network and which bits are used for which purpose within a particular method. The table below is an example of how the transmission 100 could use encode 3 bits as part of the system information transmission to signal some possible early UE capabilities. The specific techniques shown in this table are examples only, but each will be discussed individually below. The "padding" bits are not used in this example.

| Bit encoding | UE capability indication technique |
|---|---|
| 000 | Use of reserved bits within LCIDs in the MAC header within MSG3 (As disclosed in 3GPP R2-2307195) |
| 001 | Use of R bits of MAC header (As disclosed in 3GPP R2-2307195) |
| 010 | Use of some of AMF-ID (part of 5G S-TMSI) |
| 011 | Use fewer bits of 5G S-TMSI in MSG3 than allocated and use remaining for early capability indication |
| 100 | Use of "spare value" bits inside RRC messages |
| 101 | Padding |
| 110 | Padding |
| 111 | Padding |

In general terms, there may thus be considered a method for setting up a User Equipment (UE) for an initial Random Access Channel (RACH) procedure to a cellular network. The method comprises communicating from a base station of the cellular network, for reception by at least one UE prior to starting the RACH procedure, a configuration of the base station for receiving early indication of UE capabilities as a part of the RACH procedure. In this context, communicating can comprise transmitting (for example, broadcasting or directive transmission) by the base station and/or receiving by a UE.

In particular, the communicated configuration indicates one or more portions of at least one message within the RACH procedure that the UE can use for the early indication of UE capabilities (that is, which bits of which message are to be used by the UE for the early indication of UE capabilities). Optionally, the communicated configuration also indicates a coding scheme for the early indication of UE capabilities (that is, how the information content of any bits used for the early indication of UE capabilities map to specific UE capabilities). It will be understood that this indication may be based on a common protocol, for example defined by a standard.

Specifically, the communicated configuration indicates, for the early indication of UE capabilities, one or more portions of a MSG3 message. Details and options for such portions of a MSG3 message will be discussed further below. The RACH procedure may comprise two steps or four steps. A MSG3 message may be defined for both options.

In embodiments, the communicating may be performed as part of a System Information Block (SIB) broadcast. Such broadcasts may be defined by standards.

Beneficially, the step of communicating from a base station of the cellular network may comprise receiving the configuration of the base station at a UE. Additionally or alternatively, the step of communicating from a base station of the cellular network may comprise configuring the UE for communication of early indication of UE capabilities as a part of the RACH procedure, in accordance with the communicated configuration.

In embodiments, the method may further comprise communicating an early indication of UE capabilities from a UE to the base station as a part of a RACH procedure, in accordance with the configuration communicated by the base station. Thus, the communicated configuration may be used by the UE to configure itself for transmitting the UE capabilities and these may then be transmitted accordingly.

Specific embodiments, particularly specific ways for transmitting the early indication of UE capabilities (the configuration for which may be communicated by the base station) will now be discussed. The disclosure will return to the general sense discussed now further below.

Some approaches may use bits within a Medium Access Control (MAC) header within the MSG3 message. One first such approach is to use reserved bits within a Logical Channel ID (LCID) in the MAC header of the MSG3 message. The Logical Channel ID field identifies the logical channel instance of the corresponding MAC SDU or the type of the corresponding MAC CE or padding. There is one LCID field per MAC subheader. The size of the LCID field is 6 bits. Table 6.2.1-2 of 3GPP TS 38.321 shows the possible codepoint or indices uses for LCID values in the Uplink Shared Channel (UL-SCH). This is reproduced below for convenience, where it can be seen that codepoints/indices 37-42 and 47 are indicated as "Reserved" and could be used for early UE capability indications.

| **Codepoint/ Index** | **LCID values** |
|---|---|
| 0 | CCCH of size 64 bits (referred to as "CCCH1" in TS 38.331 [5]), except for a RedCap UE |
| 1-32 | Identity of the logical channel of DCCH and DTCH |
| 33 | Extended logical channel ID field (two-octet eLCID field) |
| 34 | Extended logical channel ID field (one-octet eLCID field) |
| 35 | CCCH of size 48 bits (referred to as "CCCH" in TS 38.331 [5]) for a RedCap UE |
| 36 | CCCH of size 64 bits (referred to as "CCCH1" in TS 38.331 [5]) for a RedCap UE |
| 37-42 | Reserved |
| 43 | Truncated Enhanced BFR (one octet Cᵢ) |
| 44 | Timing Advance Report |
| 45 | Truncated Sidelink BSR |
| 46 | Sidelink BSR |
| 47 | Reserved |
| 48 | LBT failure (four octets) |
| 49 | LBT failure (one octet) |
| 50 | BFR (one octet Cᵢ) |
| 51 | Truncated BFR (one octet Cᵢ) |
| 52 | CCCH of size 48 bits (referred to as "CCCH" in TS 38.331 [5]), except for a RedCap UE |
| 53 | Recommended bit rate query |
| 54 | Multiple Entry PHR (four octets Cᵢ) |
| 55 | Configured Grant Confirmation |
| 56 | Multiple Entry PHR (one octet Cᵢ) |
| 57 | Single Entry PHR |
| 58 | C-RNTI |
| 59 | Short Truncated BSR |
| 60 | Long Truncated BSR |
| 61 | Short BSR |
| 62 | Long BSR |
| 63 | Padding |

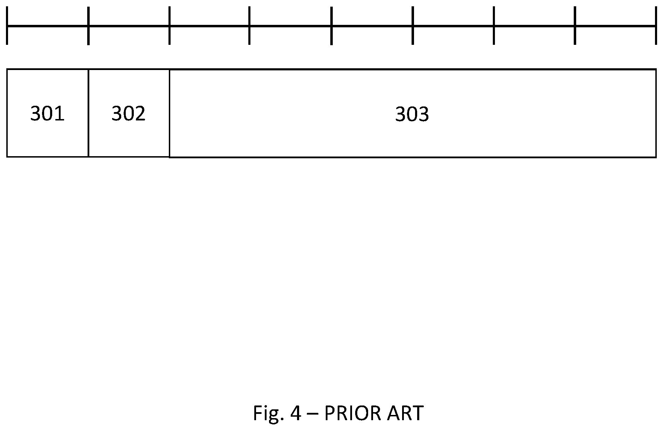

A second possible approach uses the reserved bits of a MAC Packet Data Unit (PDU) subheader. Referring next to Figure 4, there is depicted a known format for a Medium Access Control (MAC) subheader (according to Figure 6.1.2-3 of 3GPP TS 38.321 v.17.5.0). The subheader format comprises: a first reserved bit 301; a second reserved bit 302; and a 6-bit LCID 303. It may be possible to use one of the reserved bits (for instance, the second reserved bit 302). Using this bit may increase the possible encoding values in the subheader from 64, where a 6-bit LCID is used, to 128 (thereby doubling the total number of values or increasing the total number of values by 64).

Other approaches may use the RRC Connection Request message. Referring now to Figure 5, there is illustrated an existing schematic message flow diagram of a UE initial access procedure for a Radio Resource Control (RRC) protocol in a Central Unit/Distributed Unit (CU/DU) base station architecture (reproduced from Figure 8.1-1 of 3GPP TS 38.401, v.15.2.0). Where the same features are shown as in previous drawings, the same reference numerals have been employed.

The entities shown in this drawing are: the UE 20; the gNB-DU 111; the gNB-CU 112; and the Access and Mobility Management Function (AMF) 120. As explained in 3GPP TS 38.401, v.15.2.0, section 8.1, the UE initial access procedure has the following steps.

The UE 20 sends RRC Connection Request message 201 to the gNB-DU 111. In the context of the RACH procedure discussed above, the RRC Connection Request message 201 corresponds with (or forms part of) the MSG3 message. The gNB-DU 111 includes the RRC message and, if the UE is admitted, the corresponding low layer configuration for the UE in the F1AP INITIAL UL RRC MESSAGE TRANSFER message 202 and transfers to the gNB-CU 112. The INITIAL UL RRC MESSAGE TRANSFER message 202 includes a C-RNTI allocated by the gNB-DU 111. The gNB-CU 112 allocates a gNB-CU UE F1AP ID for the UE 20 and generates RRC CONNECTION SETUP message towards the UE 20. The RRC message is encapsulated in the F1AP DL RRC MESSAGE TRANSFER message 203. The gNB-DU 111 sends the RRC CONNECTION SETUP 204 message to the UE 20. This may correspond with (or form part of) the MSG4 message of the RACH procedure.

The UE 20 sends the RRC CONNECTION SETUP COMPLETE message 205 to the gNB-DU 111. This is sometimes considered a MSG5 message of the RACH procedure. The gNB-DU 111 encapsulates the RRC message in the F1AP UL RRC MESSAGE TRANSFER message 206 and sends it to the gNB-CU 112. The gNB-CU 112 sends the INITIAL UE MESSAGE message 207 to the AMF 120. The AMF 120 sends the INITIAL UE CONTEXT SETUP REQUEST message 208 to the gNB-CU 112. The gNB-CU 112 sends the UE CONTEXT SETUP REQUEST message 209 to establish the UE context in the gNB-DU 111. In this message, it may also encapsulate the RRC SECURITY MODE COMMAND message. The gNB-DU 111 sends the RRC SECURITY MODE COMMAND message 210 to the UE 20.

The gNB-DU 111 sends the UE CONTEXT SETUP RESPONSE 211 message to the gNB-CU 112. The UE 20 responds with the RRC SECURITY MODE COMPLETE message 212. The gNB-DU 111 encapsulates the RRC message in the F1AP UL RRC MESSAGE TRANSFER message 213 and sends it to the gNB-CU 112. The gNB-CU 112 generates the RRC CONNECTION RECONFIGURATION message and encapsulates it in the F1AP DL RRC MESSAGE TRANSFER message 214 to the gNB-DU 111. The gNB-DU 111 sends RRC CONNECTION RECONFIGURATION message 215 to the UE 20.

The UE 20 sends RRC CONNECTION RECONFIGURATION COMPLETE message 216 to the gNB-DU 111. The gNB-DU 111 encapsulates the RRC message in the F1AP UL RRC MESSAGE TRANSFER message 217 and send it to the gNB-CU 112. The gNB-CU 112 sends the INITIAL UE CONTEXT SETUP RESPONSE message 218 to the AMF 120.

As noted above, the MSG3 message comprises a CCCH that includes a RRC Connection Request message, which may be coded in the following format, some of which has already been discussed above. The CCCH format are those parts indicated with an asterisk (*) below, which can be seen as totalling 48 bits.

| **RRC Connection Request** | **Bits** | **Comments** |
|---|---|---|
| *CCCH-Message Differentiation | 2 | 4 messages are defined |
| *CCCH-Message Extension | 1 | |
| *UE-ID | 39 | 39 bits include 16 bits of AMF-ID plus UE-ID (remaining bits are sent in MSG5) |
| *UE-ID type | 1 | 5G-STMSI or random |
| *Cause Values | 4 | 10 values |
| *Reserved | 1 | |
| MAC LCID | 6 | 64 values |
| R bits in MAC | 2 | |
| CRC | 16 | |
| Total TBS size | 72 | |

As previously mentioned, an alternative option for the MSG3 message format is a RRC Resume message, which may have the following format. The CCCH format are those parts indicated with an asterisk (*) below, which can be seen as totalling 48 bits.

| **RRC Connection Resume** | **Bits** |
|---|---|
| *CCCH-Message Differentiation | 2 |
| *CCCH-Message Extension | 1 |
| *Short Radio Network Temporary Identifier (RNTI) | 24 |
| *MAC-I | 16 |
| *Cause Values | 4 |
| *Reserved | 1 |
| MAC LCID | 6 |
| R bits in MAC | 2 |
| CRC | 16 |
| Total TBS size | 72 |

As detailed in 3GPP TS 38.331, v.17.5.0, section 6.2, the RRCSetupRequest message, which is used for RRC connection establishment in NR, has the following format.

### RRCSetupRequest message

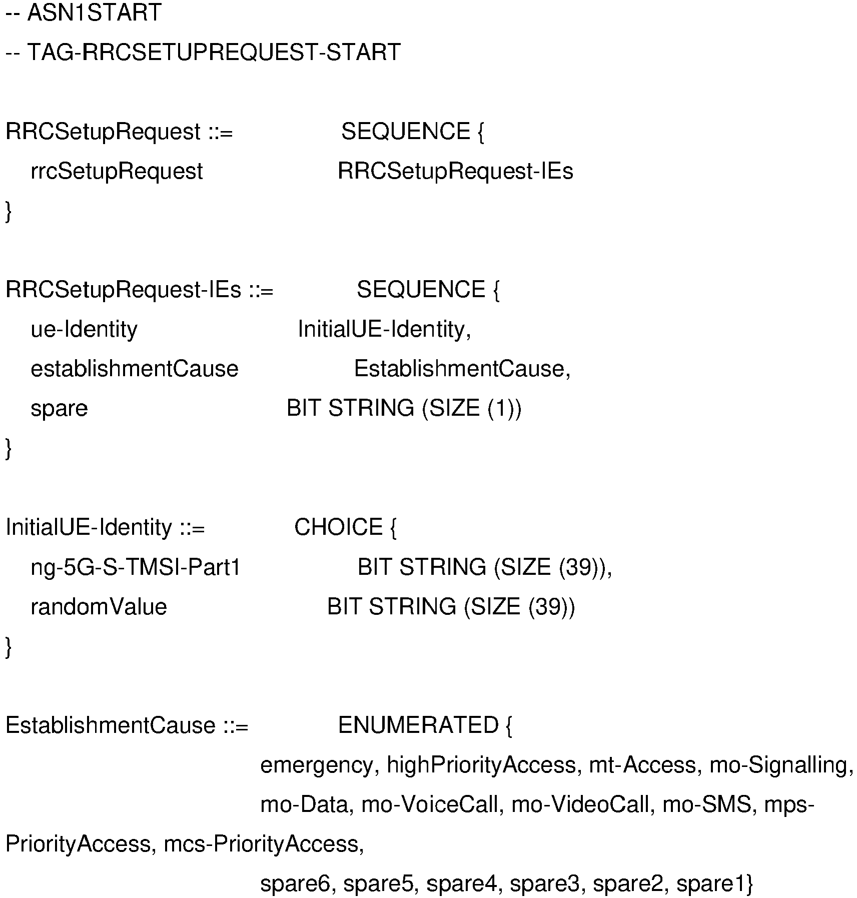

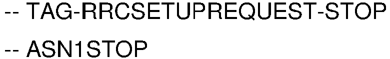

A number of possible techniques for communicating early UE capabilities may use RRC messages, for example as discussed with reference to Figure 5 above and in particular, the RRC Connection Request message 201, which corresponds with the MSG3 message. Such messages can communicate a UE temporary identity, for example a S-Temporary Mobile Subscriber Identity (S-TMSI) or an AMF-ID (which is part of a 5G S-TMSI). These are typically communicated in the RRC Connection Request message, although it will be understood that this is not essential. Specifically, 3GPP TS 23.003, v.18.3.0, section 2.11 indicates that the 5G S-TMSI has the following structure: <5G-S-TMSI> = <AMF Set ID><AMF Pointer><5G-TMSI>.

In one such approach, some of the bits used to communicate the S-TMSI, and more specifically the AMF-ID, are instead used for early UE capabilities. The AMF-ID (AMF Set ID) uniquely identifies the AMF Set within the AMF Region and is typically 16 bits. In this case, the base station may additional communicate (broadcast) a second table with, for example two octets, indicating which of the bits out of the 16 bits are used to indicate which early capability is supported. Standards may clarify how each of the most significant bits would correspond with specific early capabilities. The bits that are used from the AMF-ID to indicate early UE capabilities may be configurable per operator and/or be sent from the Core Network to the base station (gNB). Moreover, the bits from S-TMSI (for instance, AMF-ID) that are allocated for this purpose do not need to be located consecutively. As an illustrative example, bits 1, 5, 20 and 39 could be allocated from the AMF-ID bits for use to indicate early UE capabilities.

This approach works with a CCCH that includes a RRC connection Request message. However, if may not work with a CCCH that includes a RRC Connection Resume message, due to the different coding that does not include a UE ID, but instead an RNTI of 24 bits, which may not be usable for early capability indication.

In another such approach, fewer bits of 5G S-TMSI are used in MSG3 than allocated and the remaining bits are used for early UE capability indication. Typically, 39 bits of S-TMSI are communicated in MSG3. These include the AMF-ID, as discussed above. Instead of using all 39 bits for S-TMSI, the UE may use some (for instance, 31 bits) for S-TMSI communication and the remaining bits (in this example, 8 bits) for UE capabilities indication. In other words, the UE would still send 39 bits, but only 31 of these bits would be used for S-TMSI communication.

The remaining bits of the S-TMSI (for instance, 17 bits in the example her) are sent in MSG5 (RRC CONNECTION SETUP COMPLETE message), which is not size limited. In a two-step RACH procedure (where the MSG1 and MSG3 messages are sent in STEP A), the remaining bits are sent in the next message after the contention resolution message (the contention resolution message being STEP B). The network (base station) may broadcast (for reception by the UE), which early capabilities are indicated using these bits normally allocated for S-TMSI communication in MSG3.

In a further such approach, "spare value" bits inside RRC messages may be used for early UE capability indication. Some of these bits have been discussed above. Again, the network may communicate (broadcast) the encoding for communicating early UE capability indication with such bits.

Returning to the general sense of the disclosure discussed above, further essential, optional and/or preferable features will now be discussed. Not in accordance with the claimed invention, these features may also be understood as a distinct method of communicating early indication of UE capabilities from a UE to a base station of a cellular network, in one or more portions of a message forming part of a RACH procedure. Each of the general features discussed below may be considered in the context of both such methods.

In the claimed invention, the one or more portions are of a Medium Access Control (MAC) header of a MSG3 message. In some embodiments, the one or more portions may additionally be of a Radio Resource Control (RRC) Connection Request message.

Specifically, the one or more portions may comprise reserved indices within a Logical Channel ID (LCID) in a MAC header of a MSG3 message. Additionally or alternatively, the one or more portions may comprise reserved (R) bits of a MAC header of a MSG3 message.

In embodiments, the one or more portions may comprise a portion of bits allocated for transmission of a UE temporary identity in a RRC Connection Request message. For example, the one or more portions may comprise a portion of bits allocated for a S-Temporary Mobile Subscriber Identity (S-TMSI) in a RRC Connection Request message. Then, the communicated configuration may indicate a mapping between the portion of bits and specific UE capabilities and/or the communicated configuration indicates that other bits of the S-TMSI are communicated in a RRC Connection Setup Complete message (a MSG5 message). In another example, the one or more portions may comprise a portion of bits allocated for an Access and Mobility Management Function Identity (AMF-ID) in a RRC Connection Request message.

Optionally, the one or more portions may comprise "spare value" bits inside RRC messages.

In embodiments, the communicated configuration indicates one or more portions of a MSG3 message for the early indication of UE capabilities, such that the MSG3 message communicated by the UE as a part of the RACH procedure comprises a Common Control Channel (CCCH) of 48 or 64 bits that includes the early indication of UE capabilities.

Any methods disclosed herein may be implemented at or as a cellular network device or entity or a station of a cellular network, the cellular network device, entity or station being configured to operate in accordance with the method. Examples of a cellular network device or entity in this context may include a UE, a base station or cell or an entity configured for operating or controlling the base station cell. Other examples may include a network node of a cellular network (for example, a eNB or gNB). For example, the network entity may include a processor and at least one communication interface, particularly comprising one or both of a transmitter and receiver. A UE or user terminal may likewise include a processor and at least one communication interface, particularly comprising one or both of a transmitter and receiver. A controller for a cellular network device or entity may also be considered.

Any of the methods described herein may be implemented as a computer program. The computer program may be configured to control a cellular network device, node or entity to perform any method according to the disclosure.

Although specific embodiments have now been described, the skilled person will understand that various modifications and variations are possible. For example, whilst the disclosure is described in relation to existing network architecture, it will be understood that changes to the architecture (and/or nomenclature) and/or message types or formats are possible, but the present disclosure may still be applicable in this case. Although SIB1 is indicated as a suitable transmission for communicating the configuration of the base station for early UE indication reception, an alternative, such as an on-demand SIB, may be possible. Also, combinations of any specific features shown with reference to one embodiment (or aspect) or with reference to multiple embodiments (or aspects) are also provided, even if that combination has not been explicitly detailed herein.

## Claims

1. A method for setting up a User Equipment, UE (20) for an initial Random Access Channel, RACH, procedure to a cellular network, the method comprising:
communicating (122) from a base station (10) of the cellular network, for reception by at least one UE prior to starting the RACH procedure, a configuration of the base station for receiving early indication of UE capabilities as a part of the RACH procedure;
wherein the communicated configuration indicates, for the early indication of UE capabilities, one or more portions of a Medium Access Control, MAC, header of a MSG3 message within the RACH procedure that the UE can use for the early indication of UE capabilities; and
wherein the one or more portions comprise reserved indices within a Logical Channel ID, LCID (303) in the MAC header of the MSG3 message and/or reserved, R, bits (301, 302) of the MAC header of the MSG3 message.

2. The method of claim 1, wherein the communicated configuration further indicates a coding scheme for the early indication of UE capabilities.

3. The method of claim 1 or claim 2, wherein one or more portions comprise a portion of bits allocated for transmission of a UE temporary identity in a RRC Connection Request message.

4. The method of claim 3, wherein the one or more portions comprise a portion of bits allocated for a S-Temporary Mobile Subscriber Identity, S-TMSI, in a RRC Connection Request message, preferably a portion of bits allocated for an Access and Mobility Management Function Identity, AMF-ID, in a RRC Connection Request message.

5. The method of claim 4, wherein the communicated configuration indicates a mapping between the portion of bits and specific UE capabilities and/or the communicated configuration indicates that other bits of the S-TMSI are communicated in a RRC Connection Setup Complete message.

6. The method of any preceding claim, wherein one or more portions comprise "spare value" bits inside RRC messages.

7. The method of any preceding claim, wherein the communicated configuration indicates one or more portions of a MSG3 message for the early indication of UE capabilities, such that the MSG3 message communicated by the UE as a part of the RACH procedure comprises a Common Control Channel, CCCH, of 48 or 64 bits that includes the early indication of UE capabilities.

8. The method of any preceding claim, wherein the communicating is performed as part of a System Information Block, SIB, broadcast.

9. The method of any preceding claim, wherein the step of communicating (122) from a base station of the cellular network comprises receiving the configuration of the base station at a UE and/or configuring the UE for communication of early indication of UE capabilities as a part of the RACH procedure, in accordance with the communicated configuration.

10. The method of any preceding claim, further comprising:
communicating an early indication of UE capabilities from a UE (20) to the base station (10) as a part of a RACH procedure, in accordance with the configuration communicated by the base station.

11. The method of claim 10, wherein the RACH procedure comprises two or four steps.

12. A cellular network device (10, 20), configured to operate to execute the steps of the method of any preceding claim.

## Patentansprüche

1. Verfahren zum Einrichten eines Benutzergeräts (User Equipment, UE) (20) für ein anfängliches Zufallszugriffskanalverfahren (Random Access Channel, RACH-Verfahren) an einem zellularen Netz, wobei das Verfahren umfasst:
Kommunizieren (122), von einer Basisstation (10) des zellularen Netzes, für den Empfang durch mindestens ein UE vor dem Start des RACH-Verfahrens, einer Konfiguration der Basisstation zum Empfangen einer frühen Angabe der UE-Fähigkeiten als Teil des RACH-Verfahrens;
wobei die kommunizierte Konfiguration, für die frühe Angabe von UE-Fähigkeiten, einen oder mehrere Teile eines Medienzugriffskontrollheaders (Medium Access Control, MAC-Header) einer MSG3-Nachricht innerhalb des RACH-Verfahrens angibt, die das UE für die frühe Angabe von UE-Fähigkeiten nutzen kann; und
wobei der eine oder die mehreren Teile reservierte Indizes innerhalb einer logischen Kanal-ID (Logical Channel ID, LCID) (303) in dem MAC-Header der MSG3-Nachricht und/oder reservierte (R) Bits (301, 302) des MAC-Headers der MSG3-Nachricht umfassen.

2. Verfahren nach Anspruch 1, wobei die kommunizierte Konfiguration ferner ein Kodierungsschema für die frühe Angabe von UE-Fähigkeiten angibt.

3. Verfahren nach Anspruch 1 oder Anspruch 2, wobei ein oder mehrere Teile einen Teil von Bits umfassen, die zur Übertragung einer temporären Kennung des UE in einer RRC-Verbindungsanforderungsnachricht zugeordnet sind.

4. Verfahren nach Anspruch 3, wobei der eine oder die mehreren Teile einen Teil von Bits umfassen, die für eine S-temporäre Mobilfunk-Teilnehmeridentität (S-Temporary Mobile Subscriber Identity, S-TMSI) in einer RRC-Verbindungsanforderungsnachricht zugeordnet sind, vorzugsweise einen Teil von Bits, die für eine Zugriffs- und Mobilitätsverwaltungsfunktionsidentität (Access and Mobility Management Function Identity, AMF-ID) in einer RRC-Verbindungsanforderungsnachricht zugeordnet sind.

5. Verfahren nach Anspruch 4, wobei die kommunizierte Konfiguration eine Zuordnung zwischen dem Teil von Bits und spezifischen UE-Fähigkeiten angibt und/oder die kommunizierte Konfiguration angibt, dass andere Bits der S-TMSI in einer Nachricht über den Abschluss der RRC-Verbindungseinrichtung kommuniziert werden.

6. Verfahren nach einem vorstehenden Anspruch, wobei ein oder mehrere Teile "Ersatzwert"-Bits innerhalb von RRC-Nachrichten umfassen.

7. Verfahren nach einem vorstehenden Anspruch, wobei die kommunizierte Konfiguration einen oder mehrere Teile einer MSG3-Nachricht für die frühe Angabe von UE-Fähigkeiten angibt, sodass die als Teil des RACH-Verfahrens durch das UE kommunizierte MSG3-Nachricht einen gemeinsamen Steuerkanal (Common Control Channel, CCCH) von 48 oder 64 Bits umfasst, der die frühe Angabe von UE-Fähigkeiten beinhaltet.

8. Verfahren nach einem vorstehenden Anspruch, wobei das Kommunizieren als Teil einer Systeminformationsblockübertragung (System Information Block, SIB-Übertragung) durchgeführt wird.

9. Verfahren nach einem vorstehenden Anspruch, wobei der Schritt des Kommunizierens (122) von einer Basisstation des zellularen Netzes umfasst, dass die Konfiguration der Basisstation an einem UE empfangen wird und/oder das UE entsprechend der kommunizierten Konfiguration für die Kommunikation einer frühen Angabe der UE-Fähigkeiten als Teil des RACH-Verfahrens konfiguriert wird.

10. Verfahren nach einem vorstehenden Anspruch, ferner umfassend:
Kommunizieren einer frühen Angabe der UE-Fähigkeiten von einem UE (20) an die Basisstation (10) als Teil eines RACH-Verfahrens, entsprechend der durch die Basisstation kommunizierten Konfiguration.

11. Verfahren nach Anspruch 10, wobei das RACH-Verfahren zwei oder vier Schritte umfasst.

12. Zellularnetzvorrichtung (10, 20), konfiguriert zum Ausführen der Schritte des Verfahrens nach einem vorstehenden Anspruch.

## Revendications

1. Procédé d'installation d'un équipement utilisateur, UE (20) pour une procédure de canal d'accès aléatoire, RACH, initiale vers un réseau cellulaire, le procédé comprenant :
la communication (122) à partir d'une station de base (10) du réseau cellulaire, pour la réception par au moins un UE avant le démarrage de la procédure RACH, d'une configuration de la station de base destinée à recevoir une indication précoce de capacités d'UE dans le cadre de la procédure RACH ;
dans lequel la configuration communiquée indique, pour l'indication précoce de capacités d'UE, une ou plusieurs portions d'un en-tête de contrôle d'accès au support, MAC, d'un message MSG3 dans la procédure RACH que l'UE peut utiliser pour l'indication précoce de capacités d'UE ; et
dans lequel les une ou plusieurs portions comprennent des indices réservés dans un identifiant de canal logique, LCID (303) dans l'en-tête MAC du message MSG3 et/ou des bits réservés, R, (301, 302) de l'en-tête MAC du message MSG3.

2. Procédé selon la revendication 1, dans lequel la configuration communiquée indique en outre un schéma de codage pour l'indication précoce de capacités d'UE.

3. Procédé selon la revendication 1 ou la revendication 2, dans lequel une ou plusieurs portions comprennent une portion de bits alloués pour la transmission d'une identité temporaire d'UE dans un message de demande de connexion RRC.

4. Procédé selon la revendication 3, dans lequel les une ou plusieurs portions comprennent une portion de bits alloués pour une identité d'abonné mobile temporaire S, S-TMSI, dans un message de demande de connexion RRC, de préférence une portion de bits alloués pour une identité de fonction de gestion d'accès et de mobilité, AMF-ID, dans un message de demande de connexion RRC.

5. Procédé selon la revendication 4, dans lequel la configuration communiquée indique un mappage entre la portion de bits et des capacités d'UE spécifiques et/ou la configuration communiquée indique que d'autres bits du S-TMSI sont communiqués dans un message d'achèvement d'installation de connexion RRC.

6. Procédé selon l'une quelconque des revendications précédentes, dans lequel une ou plusieurs portions comprennent des bits de « valeur de réserve » à l'intérieur de messages RRC.

7. Procédé selon l'une quelconque des revendications précédentes, dans lequel la configuration communiquée indique une ou plusieurs portions d'un message MSG3 pour l'indication précoce de capacités d'UE, de telle sorte que le message MSG3 communiqué par l'UE dans le cadre de la procédure RACH comprend un canal de commande commun, CCCH, de 48 ou 64 bits qui comporte l'indication précoce de capacités d'UE.

8. Procédé selon l'une quelconque des revendications précédentes, dans lequel la communication est réalisée dans le cadre d'une diffusion de bloc d'informations système, SIB.

9. Procédé selon l'une quelconque des revendications précédentes, dans lequel l'étape consistant à communiquer (122) à partir d'une station de base du réseau cellulaire comprend la réception de la configuration de la station de base au niveau d'un UE et/ou la configuration de l'UE pour la communication d'indication précoce de capacités d'UE dans le cadre de la procédure RACH, conformément à la configuration communiquée.

10. Procédé selon l'une quelconque des revendications précédentes, comprenant en outre :
la communication d'une indication précoce de capacités d'UE d'un UE (20) à la station de base (10) dans le cadre d'une procédure RACH, conformément à la configuration communiquée par la station de base.

11. Procédé selon la revendication 10, dans lequel la procédure RACH comprend deux ou quatre étapes.

12. Dispositif de réseau cellulaire (10, 20), configuré pour fonctionner afin d'exécuter les étapes du procédé de l'une quelconque des revendications précédentes.
